# EUROPEAN PATENT SPECIFICATION

(11) **EP 4 550 522 B1**
(45) Date of publication and mention of the grant of the patent: **12.11.2025**
(21) Application number: 23207037.5
(22) Date of filing: 31.10.2023
(51) Int. Cl.: H01M 10/613, H01M 10/625, H01M 10/6556

(54) **BATTERY SYSTEM WITH IMPROVED COOLING SYSTEM**
BATTERIESYSTEM MIT VERBESSERTEM KÜHLSYSTEM
SYSTÈME DE BATTERIE À SYSTÈME DE REFROIDISSEMENT AMÉLIORÉ

(43) Date of publication of application: 07.05.2025
(73) Proprietor: Samsung SDI Co., Ltd., Yongin-si, Gyeonggi-do 17084 (KR)
(72) Inventor: Ipek, Eymen, 8020 Graz (AT)
(74) Representative: Gulde & Partner

(56) References cited:
- EP-A1- 4 075 575
- EP-B1- 3 080 851
- EP-B1- 3 579 326
- WO-A1-2012/118015
- CN-U- 216 720 056
- CN-U- 218 274 796
- JP-A- 2023 000 119

## Description

### Field of the Disclosure

The present disclosure relates to a battery system which, due to an improved cooling system, more securely handles a thermal runaway of one or more of its battery cells. Further, the present invention relates to a vehicle including such a battery system.

### Technological Background

Recently, vehicles for transportation of goods and peoples have been developed that use electric power as a source for motion. Such an electric vehicle is an automobile that is propelled permanently or temporarily by an electric motor, using energy stored in rechargeable batteries. An electric vehicle may be solely powered by batteries (Battery Electric Vehicle BEV) or may include a combination of an electric motor and, for example, a conventional combustion engine (Plugin Hybrid Electric Vehicle PHEV). BEVs and PHEVs use high-capacity rechargeable batteries, which are designed to give power for propulsion over sustained periods of time. Generally, a rechargeable (or secondary) battery cell includes an electrode assembly including a positive electrode, a negative electrode, and a separator interposed between the electrodes. A solid or liquid electrolyte allows movement of ions during charging and discharging of the battery cell. The electrode assembly is located in a casing and electrode terminals, which are positioned on the outside of the casing, establish an electrically conductive connection to the electrodes. The shape of the casing may be, for example, cylindrical or rectangular.

A battery module is formed of a plurality of battery cells connected in series or in parallel. That is, the battery module is formed by interconnecting the electrode terminals of the plurality of battery cells depending on a required amount of power and in order to realize a high-power rechargeable battery.

Battery modules can be constructed in either a block design or in a modular design. In the block design each battery cell is coupled to a common current collector structure and a common battery management system and the unit thereof is arranged in a housing. In the modular design, pluralities of battery cells are connected together to form submodules and several submodules are connected together to form the battery module. In automotive applications, battery systems generally include of a plurality of battery modules connected in series for providing a desired voltage.

A battery pack is a set of any number of (for example identical) battery modules or single battery cells. The battery modules, respectively battery cells, may be configured in a series, parallel or a mixture of both to deliver the desired voltage, capacity, and/or power density. Components of a battery pack include the individual battery modules, and the interconnects, which provide electrical conductivity between the battery modules.

A thermal management system may be included to provide thermal control of the battery pack, to safely use the at least one battery module or cell by efficiently emitting, discharging, and/or dissipating heat generated from its rechargeable batteries. If the heat emission/discharge/dissipation is not sufficiently performed, temperature deviations may occur between respective battery cells, which may cause that the battery module may no longer generate a desired (or designed) amount of power. In addition, an increase of the internal temperature can lead to abnormal reactions occurring therein and thus charging and discharging performance of the rechargeable battery deteriorates and the life-span of the rechargeable battery is shortened. Thus, cell cooling for effectively emitting/discharging/dissipating heat from the cells is required.

Exothermic decomposition of cell components may lead to a so-called thermal runaway. Generally, thermal runaway describes a process that accelerates due to increased temperature, in turn releasing energy that further increases temperature. Thermal runaway occurs in situations when an increase in temperature changes the conditions in a way that causes a further increase in temperature, often leading to a destructive result. In rechargeable battery systems, thermal runaway is associated with strong exothermic reactions that are accelerated by temperature rise. In thermal runaway, the battery cell temperature rises incredibly fast and the energy stored is released very suddenly. In extreme cases, thermal runaway can cause battery cells to explode and start fire. In minor cases, it can cause battery cells to be damaged beyond repair.

When a battery cell is heated above a critical temperature (for example, above 150°C) the battery cell can transition into a thermal runaway. Generally, temperatures outside of the safe region on either the low or high side may lead to irreversible damage to the battery cell and therefore may possible trigger thermal runaway. Thermal runaway may also occur due to an internal or external short circuit of the battery cell or poor battery maintenance. For example, overcharging or rapid charging may lead to thermal runaway.

During thermal runaway, the failed battery cell may reach a temperature exceeding 700°C. Further, large quantities of hot gas are ejected from inside of the failed battery cell through the venting opening of the cell housing into the battery pack. The main components of the vented gas are H₂, CO₂, CO, electrolyte vapor and other hydrocarbons. The vented gas is therefore flammable and potentially toxic. The vented gas also causes a gas-pressure to increase inside the battery pack. In the worst case, the high temperatures lead to the process spreading to neighboring cells and fire in the battery pack. At this stage, the fire is hardly to extinguish.

A battery cell or pack experiencing a thermal runaway may transfer heat to neighboring battery cells or packs via thermal propagation. Such heat may be transferred conductively via the respective housings encasing the battery cells/packs and via any crossbeams which may be arranged between battery packs, and also via electrical connecting means as e.g. cables and busbars. To counter thermal propagation, battery systems may be provided with cooling systems which pump cooling fluid via cooling channels along, for example, a bottom side of the battery cells.

However, thermal propagation may also occur via the cooling system because while the cooling fluid cools down the battery cell experiencing the thermal runaway, the cooling fluid itself may be heated to critical temperatures. Such thermal propagation is often overlooked in known battery systems.

Such battery systems are disclosed, for example, in WO 2012/118015 A1, CN 216 720 056 U, EP 3 579 326 B1, EP 4 075 575 A1, EP 3 080 851 B1 and CN 218 274 796 U.

It is thus an object of the present invention to overcome or reduce at least some of the drawbacks of the prior art and to provide a battery system with an improved cooling system.

### Summary of Invention

The invention is defined by the appended claims. The description that follows is subjected to this limitation. Any disclosure lying outside the scope of said claims is only intended for illustrative as well as comparative purposes.

According to one aspect of the present disclosure, a battery system is provided, including at least three battery units, each battery unit including one or more battery cells and a cooling channel segment, the cooling channel segment forming part of a cooling circuit of the battery system, wherein the battery units are arranged in at least one row such that each of the battery units faces at least one of the other battery units of the same or of another row, wherein at least two of the battery units are directly connected in series with one another via their common cooling channel segment, and only those battery units that do not face each other are connected in series.

According to another aspect of the present disclosure, the battery system includes at least six battery units, wherein the battery units are arranged in at least two rows, wherein the battery units are arranged such that each of the battery units faces at least one other battery unit of the same row and one other battery unit of another row.

According to another aspect of the present disclosure, the battery units of a first row of the at least two rows are connected in parallel via a respective cooling channel segment and/or the battery units of a second row of the at least two rows are connected in parallel via a respective cooling channel segment.

According to another aspect of the present disclosure, only battery units that do not face each other and that are of different rows are connected in series.

According to another aspect of the present disclosure, from the battery units of the same row, only the next but one battery units are connected with one another in series via the respective cooling channel segment.

Yet another aspect of the present disclosure refers to an electric vehicle including the battery system according to any one of the preceding aspects.

Further aspects of the present disclosure could be learned from the dependent claims or the following description.

### Brief Description of the Drawings

Features will become apparent to those of ordinary skill in the art by describing in detail exemplary embodiments with reference to the attached drawings in which:
- Fig. 1a and 1b: illustrate schematic top views of non-claimed battery systems where adjacent battery units are connected in series.
- Fig. 2: illustrates a schematic top view of a battery system according to a first embodiment of the invention.
- Fig. 3: illustrates a schematic top view of a battery system according to a second embodiment of the invention.

### Detailed Description of the Invention

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted. The present disclosure, however, may be embodied in various different forms, and should not be construed as being limited to only the illustrated embodiments herein. Rather, these embodiments are provided as examples so that this disclosure will be thorough and complete, and will fully convey the aspects and features of the present disclosure to those skilled in the art. Accordingly, processes, elements, and techniques that are not considered necessary to those having ordinary skill in the art for a complete understanding of the aspects and features of the present disclosure may not be described. In the drawings, the relative sizes of elements, layers, and regions may be exaggerated for clarity.

As used herein, the term "and/or" includes any and all combinations of one or more of the associated listed items. Further, the use of "may" when describing embodiments of the present disclosure refers to "one or more embodiments of the present disclosure." In the following description of embodiments of the present disclosure, the terms of a singular form may include plural forms unless the context clearly indicates otherwise.

It will be understood that although the terms "first" and "second" are used to describe various elements, these elements should not be limited by these terms. These terms are only used to distinguish one element from another element. For example, a first element may be named a second element and, similarly, a second element may be named a first element, without departing from the scope of the present disclosure. As used herein, the term "and/or" includes any and all combinations of one or more of the associated listed items. Expressions such as "at least one of," when preceding a list of elements, modify the entire list of elements and do not modify the individual elements of the list.

As used herein, the term "substantially," "about," and similar terms are used as terms of approximation and not as terms of degree, and are intended to account for the inherent deviations in measured or calculated values that would be recognized by those of ordinary skill in the art. Further, if the term "substantially" is used in combination with a feature that could be expressed using a numeric value, the term "substantially" denotes a range of +/- 5% of the value centered on the value.

It will be further understood that the terms "include," "comprise," "including," or "comprising" specify a property, a region, a fixed number, a step, a process, an element, a component, and a combination thereof but do not exclude other properties, regions, fixed numbers, steps, processes, elements, components, and combinations thereof.

It will also be understood that when a film, a region, or an element is referred to as being "above" or "on" another film, region, or element, it can be directly on the other film, region, or element, or intervening films, regions, or elements may also be present.

In the following description of embodiments of the present disclosure, the terms of a singular form may include plural forms unless the context clearly indicates otherwise.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

### General Concept

According to one aspect of the present disclosure, a battery system is provided. The battery system includes at least three battery units which may be accommodated inside a battery housing. The battery units each include at least one battery cell, for example, a plurality of battery cells, and a cooling channel segment. Thus, a battery unit may include exactly one battery cell. Also, a battery unit may include a plurality of battery cells which may be interconnected via electrical connector, e.g. busbars, contacting respective electrode/cell terminals of the battery cells to form one or more battery modules/battery packs. Thus, the battery cells of one battery unit may be arranged to form a battery pack or battery module. The battery cells may e.g. be prismatic or cylindrical cells. Each of the battery units may include a venting exit at a venting side of the battery unit, the venting exits allowing a venting gas stream to escape the battery units during a thermal runaway. Venting valves may be provided at the venting exits. The venting side may be the top side and/or the bottom side of the battery unit, i.e. venting exits may be provided at the top side and/or the bottom side of the battery unit.

The cooling channel segment forms part of a cooling circuit or cooling system of the battery system. The terms cooling circuit and cooling system may be used interchangeably. The battery system may include a cooling circuit, the cooling circuit including a cooling channel that extends along a side, for example, the bottom side, of the battery units from a supply line for supplying cooling fluid to the cooling channel to a return line for returning or discharging the cooling fluid from the cooling channel. The cooling channel segment of a battery unit is the part of the cooling channel that extends along a side, for example, the bottom side, of the at least one battery cell of said battery unit for cooling said battery unit. Thus, the battery units may be cooled via the cooling circuit in that cooling fluid is pumped through the supply line, along the cooling channel and thus through the respective cooling channel segments, and out of the return line. The battery units, i.e. the battery cells included in the battery units, thus transfer heat to the cooling fluid, during a thermal runaway.

The battery units are arranged in at least one row, for example, in at least two rows. That is, the battery units are lined up or, in other words, are arranged sequentially. In such an arrangement, each of the battery units faces at least one of the other battery units. Each of the battery units faces at least one of the other battery units of the same or of another row. In other words, the battery units are arranged such that each of the battery units includes at least one side which faces a side of one of the other battery units. Two battery units facing each other means that no further battery unit is arranged between these two battery units. Such battery units facing each other may be considered adjacent or neighboring battery units and will also be referred to as such in the following. In other words, battery units that are arranged next to each other may be considered facing each other (with at least one side). The battery units of one row each face at least one battery unit of the same row. Also, if more than row of battery units is provided, battery units of different rows may be facing each other (with at least one side). For example, a battery unit may face a battery unit arranged at its left side and a battery unit arranged at its right side in the same row and also a third battery unit of another row.

According to the invention, at least two of the battery units are connected in series with one another via their cooling channel segments, wherein only those battery units that do not face each other are connected in series. Battery units being connected in series with one another via their cooling channel segments means that the cooling channel segments of these battery units are connected with one another. In other words, according to the invention, the cooling channel segments of at least two of the battery units are connected in series, wherein only the cooling channel segments of those battery units that do not face each other are connected in series. Thus, the connected battery units are fluidly connected. From the battery units included in the battery system, only those are connected in series via their cooling channels which are not facing each other, i.e. only those battery units that are not adjacent/neighboring to each other. In other words, neighboring/adjacent battery units are not connected in series via their cooling channel segments. Those neighboring/adjacent battery units may instead by connected in parallel or not at all.

By only connecting these battery units in series via their cooling channel segments which are not facing each other, i.e. which are no immediate neighbors, heat conduction and heat convection transfer are separated. If one of the battery units experiences a thermal runaway, this battery unit may heat up to very high temperatures (up to 1000°C), wherein this heat is transferred to the cooling fluid and transported away by heat convection via the cooling fluid along the cooling circuit. As the cooling fluid leaving the battery unit that experienced the thermal runaway does not enter adjacent/neighboring battery units, due to the lack of a series connection to these adjacent/neighboring battery units, the neighboring battery units are not heated up by the cooling fluid which otherwise, due to the thermal runaway, may at this stage also have an undesirable high temperature. The neighboring battery units can only experience heat transfer from the battery unit undergoing the thermal runaway by heat conduction via e.g. the unit housings encasing the respective battery units and/or e.g. via crossbeams which may separate the neighboring battery units. On the other hand, while the battery units in series connection with the battery unit experiencing the thermal runaway may be heated up convectively via the cooling fluid, these battery units are not adjacent/neighboring to the battery unit experiencing the thermal runaway so that they are not heated conductively or at least not as much. Thus, heat conduction and heat convection transfer between the battery units are separated and the heat energy of the failed battery unit or cell can be distributed to a larger heat capacity. Therefore, an improved cooling system is realized so that the battery units of the inventive battery system may more securely handle a thermal runaway of one or more of its battery cells, thermal propagation between the battery units is reduced.

According to an embodiment, the battery system includes at least six battery units, wherein the battery units are arranged in at least two rows. In each row, the battery units may be lined up as explained above. The battery units may be arranged such that each of the battery units faces at least one other battery unit of the same row and one other battery unit of another row. Also in this embodiment, at least two of the battery units are connected in series with one another via their cooling channel segments, wherein only those battery units that do not face each other are connected in series. For example, two battery units of different rows are connected in series. Also, a battery unit may be connected in series with one or more battery units of the same row and with one or more battery units of another row. For such an arrangement, the cooling architecture of the invention is advantageous. Thermal propagation via convection and via conduction may be separated for battery units of two different rows.

According to a respective embodiment, the battery units of a first row of the at least two rows are connected in parallel via their cooling channel segments and/or the battery units of a second row of the at least two rows are connected in parallel via their cooling channel segments. In this embodiment it may be provided that no battery units of the same row are connected in series but only battery units of different rows are connected in series while the battery units of the same row are connected in parallel. This way, the battery units of the same row only experience heat conduction but not heat convection. For example, only battery units that do not face each other and that are of different rows are connected in series. In other words, it may be provided that from the battery units of different rows only those battery units that do not face each other are connected in series. A first battery unit of a first row may be connected in series to a second battery unit of a second row via their cooling channel segments. For example, battery units of different rows that are arranged diagonally across from each other may be connected in series. Thus, heat conduction and heat convection transfer between the battery units are separated and the heat energy of the failed battery unit or cell can be distributed to a larger heat capacity.

According to an embodiment, from the battery units of the same row, only the next but one battery units are connected with one another in series via their cooling channel segments. In other words, every second battery unit may be connected to every other second battery unit. In this embodiment, no adjacent/neighboring battery units are connected in series. This embodiment may be advantageous for a single row of battery units but also for multiple rows of battery units. Thus, heat conduction and heat convection transfer between the battery units are separated and the heat energy of the failed battery unit or cell can be distributed to a larger heat capacity.

The invention also pertains to an electric vehicle including a battery system according to the invention.

### Specific Embodiments

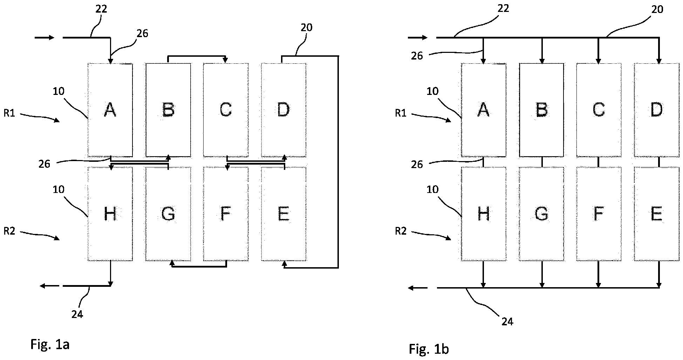

Fig. 1a is a top view illustrating schematically a non-claimed example battery system including a plurality of battery units 10 arranged in two rows R1, R2. In the battery system of Fig.1, row R1 includes four battery units A, B, C, and D while row R2 includes four battery units E, **F,** G, and H. The battery units 10 may each include one or more battery cells.

The battery units 10 are arranged such that each of the battery units 10 faces at least one of the other battery units 10 of the same and also of the other row. For example, the battery unit B faces at a first (or left) side, the battery unit A, at a second (or right) side, the battery unit C, and at a third (or below) side, the battery unit G. That is, no battery unit is arranged in between the battery unit B and the battery unit A, in between battery the unit B and the battery unit C, and also not in between the battery unit B and the battery unit G. Thus, the battery units A, C, and G may be considered adjacent or neighboring to the battery unit B.

Further, the battery units 10 include cooling channel segments 26 which form part of a cooling channel 20 of a cooling circuit of the battery system. The cooling circuit includes the cooling channel 20 extending below the battery units 10 along a bottom side of the battery units 10, a supply line 22 for supplying a cooling fluid to the cooling channel 20, and a return line 24 for returning or discharging the cooling fluid from the cooling channel 20. Cooling plates may be integrated into the cooling channel 20 at the bottom sides of the battery units 10.

Arrow heads placed along the cooling channel 20 indicate the flow direction of the cooling fluid through the cooling channels 20 and thus through the battery units 10. As shown, all of the battery units 10 are connected in series with one another via their cooling channel segments 26 and thus via the cooling channel 20. That is, the cooling fluid entering the cooling channel 20 via the supply line 22 flows at first through battery unit A, then through battery unit B, then through battery unit C, and so on until the cooling fluid leaves the battery unit H and reaches the return line 24. In other words, all of the battery units 10 in the example of Fig. 1a are fluidly connected in series as regards the cooling fluid. In the following, the battery units 10 being connected with one another means a fluid connection via their cooling channel segments 26 and thus via the cooling channel 20. Such a series connection of battery units 10 may be prone to thermal propagation, during a thermal runaway event.

For example, the battery unit B may experience a thermal runaway resulting in the battery unit B heating up to temperatures of many hundreds of degrees Celsius. Heat may then be transferred conductively from the battery unit B to the adjacent the battery units A, C, and G, e.g. via housings of the respective battery units and any crossbeams arranged between the battery units. This leads to the battery units A, C, and G heating up as well.

Further, due to the series connection of the battery units 10 via their cooling channel segments 26, the battery unit C is heated up even further as it directly follows the battery unit B as regards the cooling fluid. That is, the cooling fluid leaving the battery unit B along the indicated flow direction subsequently enters the adjacent battery unit C and thus convectively heats the battery unit C. This may lead to a heat up of the battery unit C to temperatures that may damage the battery unit C and may even, in the worst case, result in a thermal runaway of the battery unit C. The further battery units down the cooling channel 20, for example, the battery unit D, may experience the same problem depending on the temperature the cooling fluid has when it reaches the subsequently arranged battery units. The invention overcomes this problem of thermal propagation as explained below.

As another non-claimed example of a battery system cooling architecture, Fig. 1b shows an arrangement of battery units 10 where the battery units A, B, C, and D of the first row R1 are connected in parallel via their cooling channel segments 26 and thus the cooling channel 20. Also, the battery units E, F, G, and H of the second row R2 are connected in parallel. Further, the battery units A, B, C, and D of the first row R1 are connected in series with the battery units E, F, G, and H of the second row R2. That is, the battery unit A is connected in series with the battery unit H, the battery unit B is connected in series with the battery unit G, and so on.

Here, the problem of thermal propagation occurs as well. For example, the battery unit B may experience a thermal runaway resulting in the battery unit B heating up to temperatures of many hundreds of degrees Celsius. Heat may then be transferred conductively from the battery unit B to the adjacent battery units A, C, and G, for example, via housings of the respective battery units 10 and any crossbeams arranged between the battery units 10. This leads to the battery units A, C, and G heating up as well as with the first example of Fig. 1a.

Further, due to the series connection of the battery unit B with the battery unit G, the battery unit G is heated up even further as it is arranged downstream of the battery unit B as regards the cooling fluid. That is, the cooling fluid leaving the battery unit B along the indicated flow direction subsequently enters the adjacent battery unit G. This may lead to a heat up of the battery unit G to temperatures that may damage the battery unit G and may even, in the worst case, result in a thermal runaway of the battery unit G. The invention overcomes this problem of thermal propagation as explained in the following.

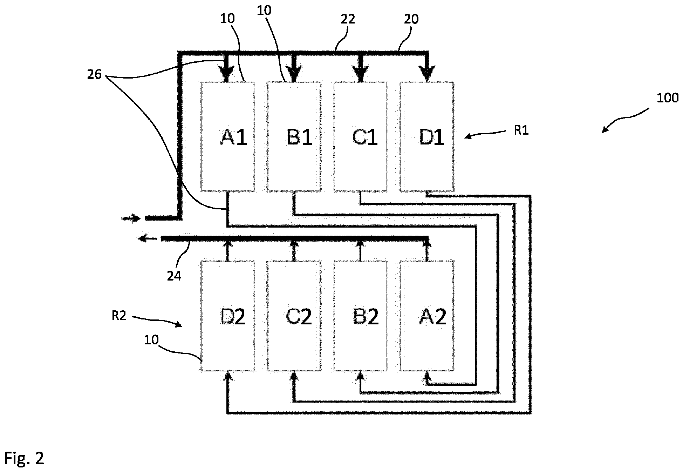

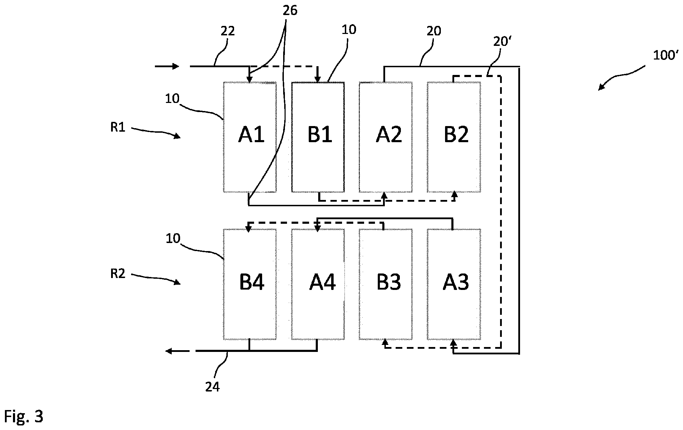

Figures 2 and 3 show two embodiments of battery systems according to the invention which include a cooling architecture that overcomes the problem of thermal propagation.

In the embodiment of Fig. 2, a battery system 100 is shown including a plurality of battery units 10, wherein the battery units A1, B1, C1, and D1 of the first row R1 are connected in parallel via their cooling channel segments 26 and thus the cooling channel 20. Also, the battery units A2, B2, C2, and D2 of the second row R2 are connected in parallel. Further, the battery units A1, B1, C1, and D1 of the first row R1 are connected in series with the battery units A2, B2, C2, and D2 of the second row R2. However, while there is a series connection between the battery units 10 of the first row R1 and the battery units 10 of the second row R2, only those battery units 10 that do not face each other are connected in series. In other words, the battery system 100 of Fig. 2 does not include any adjacent or neighboring battery units 10 that are connected in series via their cooling channel segments 26 and thus via the cooling channel 20.

As shown, battery unit B1 is connected in series only to battery unit B2 of the other row, wherein the battery unit B1 and the battery unit B2 do not face each other meaning that they are not adjacent/not neighbors. If the battery unit B1 experiences a thermal runaway, heat may be transferred conductively from the battery unit B1 to the adjacent battery units A1, C1, and C2, e.g. via housings of the respective battery units 10 and any crossbeams arranged between the battery units 10, as with the previously explained example. However, none of these adjacent battery units A1, C1, and C2 is heated convectively via the cooling fluid because none of the adjacent battery units A1, C1, and C2 is connected in series to the battery unit B1. Rather, only the battery unit B2 receives the cooling fluid heated up by the battery unit B1 due to their series connection. Thus, the battery unit B2 may heat up convectively but, as the battery unit B2 is not facing the battery unit B1, i.e. is not adjacent/neighboring to the battery unit B1, there is no or at least much less heat conduction from the battery unit B1 to the battery unit B2.

Thus, with the battery system 100 of Fig. 2, heat transfer via conduction and heat transfer via convection from one battery unit 10 to another battery unit 10 are separated. During a thermal runaway of one battery unit 10, the further battery units 10 may be heated up conductively or convectively but not both. Thus, thermal propagation and thus the risk of propagation of a thermal runaway is reduced.

In an embodiment of Fig. 3, a battery system 100' is shown including a plurality of battery units 10, wherein the battery units A1, A2 of the first row R1 and A3, A4 of the second row R2 are connected in fluidly series via their cooling channel segments 26 and thus via the cooling channel 20. That is, the battery unit A2 is arranged subsequently in the series connection to battery unit A1, the battery unit A3 subsequently to the battery unit A2, and the battery unit A4 subsequently to the battery unit A3. Correspondingly, battery units B1, B2, B3, and B4 are arranged in series via their cooling channel segments 26 and thus via the cooling channel 20'. Thus, from the battery units 10 of the same row R1, R2, only the next but one battery units 10 are connected with one another in series via their cooling channel segments 26. For example, the battery unit B1 is connected in series not with the next battery unit A2 but with the next but one battery unit B2. In this regard, the two separate cooling channels 20, 20' are formed, wherein the flow of cooling liquid along cooling channel 20 is shown via a continuous line and the flow of cooling liquid along the cooling channel 20' is shown via a dashed line. The cooling channels 20, 20' may form part of the same cooling circuit having a common supply line 22 and a common return line 24 for both cooling channels 20, 20' as shown in Fig. 2.

In this embodiment, if for example battery unit B1 experiences a thermal runaway, the battery units facing the battery unit B1 are heated up via conduction. That is, the battery units A1, A2, and A4 are heated up by heat transfer via conduction from the battery unit B1. These battery units are not heated convectively, however, as there are not connected in series with the battery unit B1. The heated up cooling fluid leaving the battery unit B1 rather flows to the battery unit B2 arranged subsequently in the series connection to the battery unit B1 so that the battery unit B2, and possibly the further battery units B3 and B4 of the series connection, are heated up convectively. All the battery units B2 to B4 that are in series connection with the battery unit B1 are not facing the battery unit B1, i.e. are not adjacent/neighboring to the battery unit B1 and therefore are not or at least not as much heated up conductively by heat transfer via e.g. the battery unit housing and crossbeams.

Thus, also with the battery system 100' of Fig. 3, heat transfer via conduction and heat transfer via convection from one battery unit 10 to another battery unit 10 are separated. During a thermal runaway of one battery unit 10, the further battery units 10 may be heated up conductively or convectively but not both. Thus, thermal propagation and thus the risk of propagation of a thermal runaway is reduced.

### Reference signs

- 10: battery units
- 20: cooling channel
- 20': cooling channel
- 22: supply line
- 24: return line
- 26: cooling channel segments
- 100: battery system
- 100': battery system
- R1: row 1
- R2: row 2

## Claims

1. A battery system (100, 100'), comprising:
at least three battery units (10), each battery unit (10) including one or more battery cells and a cooling channel segment (26), the cooling channel segment (26) forming part of a cooling circuit of the battery system (100),
wherein the battery units (10) are arranged in at least one row (R1, R2) such that each of the battery units (10) faces at least one of the other battery units (10) of the same or of another row, and,
charaterized in that
at least two of the battery units (10) that do not face each other are directly connected in series with one another via their common cooling channel segment (26).

2. The battery system (100, 100') according to claim 1, the battery system comprises at least six battery units, wherein the battery units (10) are arranged in at least two rows (R1, R2), wherein the battery units (10) are arranged such that each of the battery units (10) faces at least one other battery unit (10) of the same row (R1, R2) and one other battery unit (10) of another row (R1, R2).

3. The battery system (100') according to claim 2, wherein the battery units (10) of a first row (R1) of the at least two rows are connected in parallel via a respective cooling channel segment (26) and/or wherein the battery units (10) of a second row (R2) of the at least two rows are connected in parallel via a respective cooling channel segment.

4. The battery system (100, 100') according to claim 2 or 3, wherein only battery units (10) that do not face each other and that are of different rows (R1, R2) are connected in series.

5. The battery system (100) according to claim 1 or 2, wherein, from the battery units (10) of the same row (R1, R2), only the next but one battery units (10) are connected with one another in series via the respective cooling channel segment.

6. An electric vehicle comprising the battery system (100) according to any one of the preceding claims.

## Patentansprüche

1. Batteriesystem (100, 100'), umfassend:
mindestens drei Batterieeinheiten (10), wobei jede Batterieeinheit (10) eine oder mehrere Batteriezellen und ein Kühlkanalsegment (26) umfasst, wobei das Kühlkanalsegment (26) einen Teil eines Kühlkreislaufs des Batteriesystems (100) bildet,
wobei die Batterieeinheiten (10) in mindestens einer Reihe (R1, R2) angeordnet sind, so dass jede der Batterieeinheiten (10) mindestens einer der anderen Batterieeinheiten (10) derselben oder einer anderen Reihe gegenüberliegt, und
**dadurch gekennzeichnet, dass**
mindestens zwei der Batterieeinheiten (10), die einander nicht gegenüberliegen, über ihr gemeinsames Kühlkanalsegment (26) direkt miteinander in Reihe geschaltet sind.

2. Batteriesystem (100, 100') nach Anspruch 1, wobei das Batteriesystem mindestens sechs Batterieeinheiten umfasst, wobei die Batterieeinheiten (10) in mindestens zwei Reihen (R1, R2) angeordnet sind, wobei die Batterieeinheiten (10) so angeordnet sind, dass jede der Batterieeinheiten (10) mindestens einer anderen Batterieeinheit (10) derselben Reihe (R1, R2) und einer anderen Batterieeinheit (10) einer anderen Reihe (R1, R2) gegenüberliegt.

3. Batteriesystem (100') nach Anspruch 2, wobei die Batterieeinheiten (10) einer ersten Reihe (R1) der mindestens zwei Reihen über ein jeweiliges Kühlkanalsegment (26) parallel geschaltet sind und/oder wobei die Batterieeinheiten (10) einer zweiten Reihe (R2) der mindestens zwei Reihen über ein jeweiliges Kühlkanalsegment parallel geschaltet sind.

4. Batteriesystem (100, 100') nach Anspruch 2 oder 3, wobei nur Batterieeinheiten (10), die einander nicht gegenüberliegen und zu unterschiedlichen Reihen (R1, R2) gehören, in Reihe geschaltet sind.

5. Batteriesystem (100) nach Anspruch 1 oder 2, wobei von den Batterieeinheiten (10) derselben Reihe (R1, R2) nur die jeweils übernächsten Batterieeinheiten (10) über das jeweilige Kühlkanalsegment in Reihe miteinander verbunden sind.

6. Elektrofahrzeug, umfassend das Batteriesystem (100) nach einem der vorstehenden Ansprüche.

## Revendications

1. Système de batterie (100, 100'), comportant :
au moins trois unités de batterie (10), chaque unité de batterie (10) incluant un ou plusieurs éléments de batterie et un segment de canal de refroidissement (26), le segment de canal de refroidissement (26) faisant partie d'un circuit de refroidissement du système de batterie (100),
dans lequel les unités de batterie (10) sont agencées en au moins une rangée (R1, R2) de sorte que chacune des unités de batterie (10) soit en face d'au moins l'une des autres unités de batterie (10) de la même ou d'une autre rangée, et,
**caractérisé en ce que**
au moins deux des unités de batterie (10) qui ne sont pas l'une en face de l'autre sont directement connectées en série l'une avec l'autre via leur segment de canal de refroidissement (26) commun.

2. Système de batterie (100, 100') selon la revendication 1, le système de batterie comporte au moins six unités de batterie, dans lequel les unités de batterie (10) sont agencées en au moins deux rangées (R1, R2), dans lequel les unités de batterie (10) sont agencées de sorte que chacune des unités de batterie (10) soit en face d'au moins une autre unité de batterie (10) de la même rangée (R1, R2) et d'une autre unité de batterie (10) d'une autre rangée (R1, R2).

3. Système de batterie (100') selon la revendication 2, dans lequel les unités de batterie (10) d'une première rangée (R1) des au moins deux rangées sont connectées en parallèle via un segment de canal de refroidissement (26) respectif et/ou dans lequel les unités de batterie (10) d'une deuxième rangée (R2) des au moins deux rangées sont connectées en parallèle via un segment de canal de refroidissement respectif.

4. Système de batterie (100, 100') selon la revendication 2 ou 3, dans lequel seules les unités de batterie (10) qui ne sont pas l'une en face de l'autre et qui sont de rangées (R1, R2) différentes sont connectées en série.

5. Système de batterie (100) selon la revendication 1 ou 2, dans lequel, parmi les unités de batterie (10) de la même rangée (R1, R2), seules les unités de batterie (10) situées après une autre unité sont connectées les unes aux autres en série via le segment de canal de refroidissement respectif.

6. Véhicule électrique comportant le système de batterie (100) selon l'une quelconque des revendications précédentes.
